# FASCICULE DE BREVET EUROPEEN

(11) **EP 1 880 187 B1**
(45) Date de publication et mention de la délivrance du brevet: **07.04.2010**
(21) Numéro de dépôt: 06754822.2
(22) Date de dépôt: 24.04.2006
(51) Int. Cl.: G01M 17/02, G01L 5/16

(54) **PNEUMATIQUE COMPORTANT UN DISPOSITIF DE MESURE DE FORCE À TIGE RIGIDE**
REIFEN MIT EINER KRAFTMESSVORRICHTUNG MIT STARREM SCHAFT
TIRE COMPRISING A FORCE MEASURING DEVICE HAVING A RIGID STEM

(30) Priorité: 04.05.2005 FR 0504521
(43) Date de publication de la demande: 23.01.2008
(73) Titulaire: Societe de Technologie Michelin, 63000 Clermont-Ferrand (FR); Michelin Recherche et Technique S.A., 1763 Granges-Paccot (CH)
(72) Inventeur: REY, Patrice, F-38430 Saint Jean De Moirans (FR); ROBERT, Philippe, F-38000 Grenoble (FR)
(74) Mandataire: Dequire, Philippe Jean-Marie Denis
(86) Numéro de dépôt international: PCT/EP2006/061795
(87) Numéro de publication internationale: WO 2006/117309

(56) Documents cités:
- EP-A- 0 937 615
- US-A- 5 864 056
- US-A1- 2003 056 579

## Description

La présente invention concerne un pneumatique équipé d'un dispositif de mesure de force.

De manière générale, la présente invention concerne un pneumatique équipé d'un dispositif de mesure de force comprenant une tige rigide reliée à une membrane sensiblement plane déformable comportant des moyens de détection d'une déformation de cette membrane.

Elle vise le domaine d'un capteur de tout type de force (force angulaire ou linéaire de pression, force de traction, moment ou accélération).

Un pneumatique équipé d'un tel capteur de force est notamment décrit dans le document US 6,666,079.

La tige rigide du dispositif de mesure de force comporte au moins une portion, ou l'intégralité de la tige, adaptée à être en contact avec un élément apte à être sollicitée par la force à mesurer.

La tige permet ainsi de transmettre l'effort appliqué à l'élément à la membrane déformable, dont la déformation est proportionnelle à l'effort à mesurer.

US 5,864,056 présente un pneumatique équipé d'un capteur de force similaire dont la tige comprend des moyens d'ancrage en forme de disque.

La présente invention a pour but de permettre une transmission efficace des efforts à mesurer.

A cet effet, la présente invention propose d'équiper un pneumatique avec un dispositif de mesure de force comprenant une tige rigide reliée à une membrane sensiblement plane déformable comportant des moyens de détection d'une déformation de la membrane, la tige comportant au moins une portion adaptée à être en contact avec un élément apte à être sollicité par la force.

Selon l'invention, la portion de tige comporte des moyens d'ancrage adaptés à coopérer avec ledit élément.

Ainsi, contrairement à l'état de la technique où la tige du capteur a généralement une forme cylindrique lisse, les moyens d'ancrage permettent d'améliorer l'adhérence de la tige avec l'élément en contact.

Cette adhérence ou ancrage amélioré permet d'obtenir une transmission efficace des efforts, notamment lorsque la force à laquelle est soumis l'élément est une force de traction qui tend à séparer l'élément du dispositif de mesure de force, ainsi que dans le cas de sollicitations répétitives.

On évite ainsi la création d'amorce dans l'élément en contact avec le capteur, pouvant entraîner des erreurs dans la mesure des efforts appliqués et éventuellement la destruction partielle ou totale de l'élément coopérant avec la tige du dispositif de mesure de force.

Selon un mode de réalisation de l'invention, les moyens d'ancrage comprennent des créneaux perpendiculaires à la membrane permettant d'améliorer la transmission d'une force tangentielle à la tige rigide.

Alternativement ou de manière complémentaire, les moyens d'ancrage comprennent des créneaux parallèles à la membrane, permettant d'améliorer la transmission d'une force normale, s'étendant dans l'axe de la tige.

Alternativement ou de manière complémentaire, les moyens d'ancrage sont formés par une portion élargie de la tige permettant ainsi d'augmenter la surface de contact entre la tige et l'élément sollicité par une force.

La présente invention est mise en oeuvre de manière avantageuse lorsque la portion de tige est adaptée à être noyée dans l'élément sollicité par la force.

D'autres particularités et avantages de l'invention apparaîtront encore dans la description ci-après.

Aux dessins annexés, donnés à titre d'exemples non limitatifs :
- la figure 1 est une vue schématique en coupe transversale d'un dispositif de mesure de force conforme à un premier mode de réalisation de l'invention ;
- les figures 2A et 2B sont deux vues de dessous du dispositif de mesure de force de la figure 1 ;
- la figure 3 est une vue schématique en coupe transversale d'un dispositif de mesure de force conforme à un deuxième mode de réalisation de l'invention ;
- la figure 4 est une vue de dessous du dispositif de mesure de force de la figure 3;
- la figure 5 est une vue schématique en coupe transversale d'un dispositif de mesure de force conforme à un troisième mode de réalisation de l'invention ;
- la figure 6 est une vue schématique en coupe transversale d'un dispositif de mesure de force conforme à un quatrième mode de réalisation de l'invention ;
- la figure 7 est une vue schématique en coupe transversale d'un dispositif de mesure de force conforme à un cinquième mode de réalisation de l'invention ;
- la figure 8 est une vue schématique en coupe transversale d'un dispositif de mesure de force conforme à un sixième mode de réalisation de l'invention ;
- la figure 9 est une vue schématique en coupe transversale d'un dispositif de mesure de force conforme à un septième mode de réalisation de l'invention ;
- la figure 10 est une vue de dessous du dispositif de mesure de force de la figure 9 ;
- les figures 11a à 11k sont des schémas illustrant la succession des étapes d'une méthode de fabrication d'un dispositif de mesure conforme à l'invention;
- les figures 12a à 12k sont des schémas illustrant les étapes d'une méthode de fabrication d'un dispositif de mesure conforme à un autre mode de réalisation de l'invention ;
- la figure 13 représente une coupe méridienne d'un pneumatique dont la bande de roulement est équipée d'un dispositif de mesure selon l'invention, montrant une première façon de placer un tel dispositif dans un élément de sculpture de la bande de roulement ;
- la figure 14 est un agrandissement d'une partie de la figure 13, montrant plus en détails l'implantation dudit dispositif;
- la figure 15 représente une deuxième façon de placer un tel dispositif dans un élément de sculpture de la bande de roulement d'un pneumatique ;
- la figure 16 représente une troisième façon de placer un tel dispositif, dans une bande de roulement d'un pneumatique ;
- les figures 17 et 18 représentent une quatrième façon d'implanter un tel dispositif, dans une bande de roulement d'un pneumatique dont la sculpture est adaptée à cet effet ;
- la figure 19 montre une cinquième façon de placer un tel dispositif, dans une bande de roulement d'un pneumatique ;
- la figure 20 montre une sixième façon de placer un tel dispositif, dans une bande de roulement d'un pneumatique ;
- la figure 21 montre une septième façon de placer un tel dispositif, dans une bande de roulement d'un pneumatique ;
- la figure 22 montre une façon de placer un tel dispositif entre flanc et bourrelet d'un pneumatique ; et
- la figure 23 montre une façon de placer un tel dispositif dans une épaule d'un pneumatique.

Dans un souci de clarté, les dimensions des différents éléments ne sont pas représentées à l'échelle.

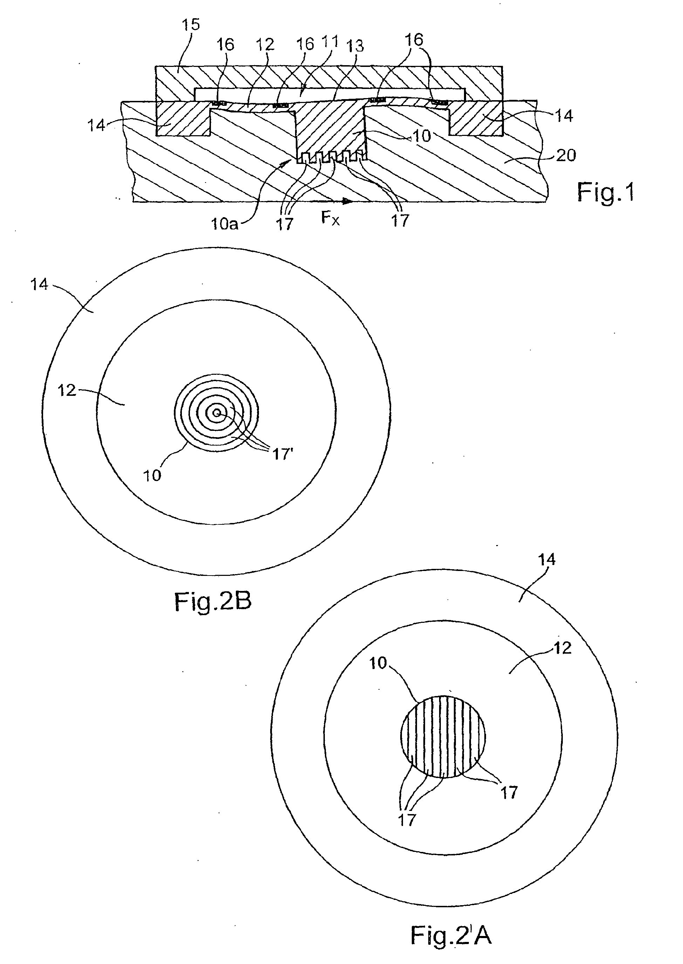

On va décrire tout d'abord en référence aux figures 1 et 2 un premier mode de réalisation d'un dispositif de mesure de force conforme à l'invention.

Le capteur de force illustré a une structure particulière du type « clou ». Il comporte une tige rigide 10 surmontée d'une tête 11.

Cette tête 11 comporte une membrane déformable et sensiblement plane 12 capable de se déformer lorsque la tige rigide 10, reliée ici au centre de la membrane, est sollicitée par une force ou un moment ou encore lorsque la structure complète du dispositif de mesure est sollicitée par une accélération, la tige formant alors une masse sismique.

Dans cet exemple de réalisation, la membrane déformable 12 est une membrane circulaire pleine, sa liaison avec la tige 10 étant réalisée dans une zone centrale 13.

Bien entendu, cette membrane déformable 12 pourrait être de structure différente, et par exemple pourrait être réalisée à partir de différents bras s'étendant de la zone centrale 13 jusqu'à une zone périphérique 14 de la membrane.

Cette zone périphérique 14 comporte des points d'ancrage qui possèdent une position stable par rapport à la tige 10, que la membrane 12 soit déformée ou non. Il existe une multitude de points d'ancrage continus dans cet exemple, s'étendant sur la zone périphérique 14 de la membrane 12.

Un capot 15 est également prévu pour recouvrir à distance la membrane 12, du côté d'une face opposée à celle portant la tige rigide 10.

Cette membrane déformable 12 comporte en outre des moyens de détection de sa déformation, par exemple constituée de jauges piézorésistives 16 alignées suivant différentes directions dans le plan de la membrane.

Ces moyens de détection peuvent ainsi comprendre huit jauges piézorésistives montées quatre par quatre en double pont de Wheastone, alignées suivant deux directions perpendiculaires dans le plan de la membrane déformable 12.

Le déséquilibre mesuré aux bornes des ponts de Wheastone est directement proportionnel à la déformation de la membrane dans la direction associée au pont de Wheastone.

Pour la détection de la déformation de la membrane et la mesure de force associée à ce dispositif, on se reportera avantageusement à la description du document US 6,666,079.

Dans ce mode de réalisation de la présente invention, une portion de tige, correspondant ici à l'extrémité libre 10a de la tige 10, est structurée par des moyens d'ancrage 17.

Ces moyens d'ancrage 17 comprennent ici des créneaux 17 perpendiculaires au plan de la membrane 12.

Comme bien illustré sur la figure 2A, ces créneaux s'étendent parallèlement les uns aux autres dans un plan correspondant à la face terminale de l'extrémité libre 10a de la tige 10.

Ces créneaux perpendiculaires à la membrane 12 débouchent ainsi à l'extrémité libre 10a de la tige 10. Ils forment ainsi des gorges de section transversale carrée ou rectangulaire qui sont ouvertes dans la face terminale de l'extrémité libre 10a de la tige.

Dans ce mode de réalisation, où au moins l'extrémité libre 10a de la tige est adaptée à être noyée dans un élément 20, ces créneaux 17 permettent d'améliorer l'ancrage dans cet élément 20 de la tige 10.

La figure 2B présente un mode de réalisation alternatif des créneaux. Les créneaux 17' sont des gorges circulaires ouvertes dans la face terminale de l'extrémité libre 10a de la tige et disposés de façon concentrique. Ils permettent aussi d'améliorer l'ancrage dans l'élément 20 de la tige 10.

La figure 1 illustre le dispositif de mesure de force dans lequel l'intégralité du dispositif, c'est-à-dire la tête 11 et la tige 10 du capteur sont noyées dans la matière de l'élément 20. Sur cette figure 1, l'élément 20 est sollicité par une force tangentielle Fx par rapport à l'axe de la tige 10.

L'effort auquel est soumis l'élément 20 peut ainsi être transmis d'une manière parfaite à la tige 10 grâce à l'adhérence et à l'ancrage amélioré par la présence des créneaux 17. Ces créneaux 17 s'étendant perpendiculairement au plan de la membrane 12, l'ancrage est particulièrement amélioré lorsque la force appliquée à l'élément 20 s'étend dans le plan de cette membrane 12.

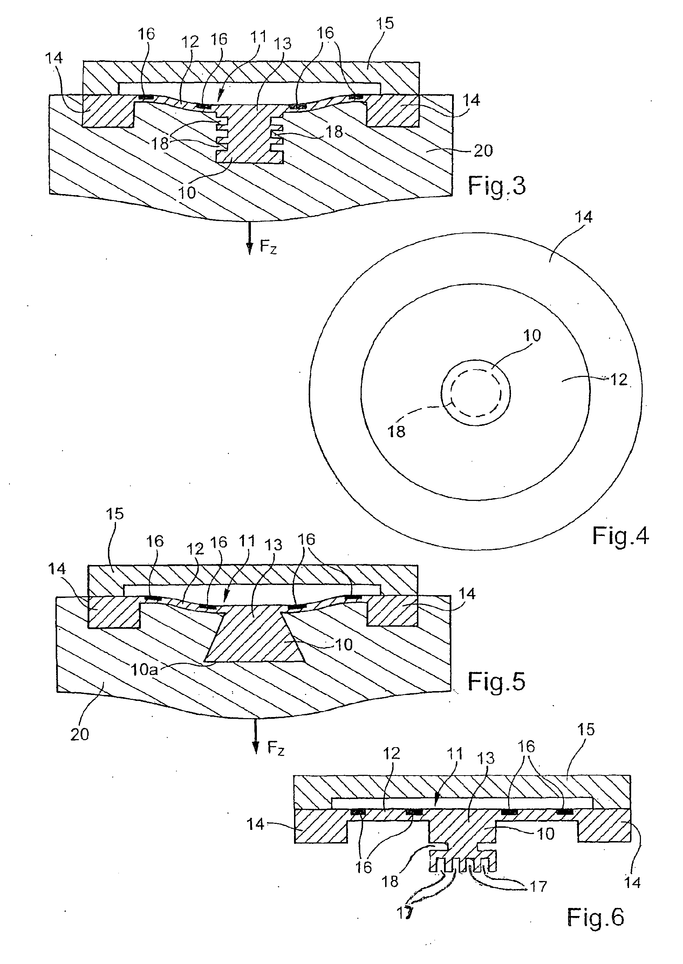

On va décrire à présent en référence aux figures 3 et 4 un deuxième mode de réalisation de l'invention.

Les éléments identiques au mode de réalisation décrit précédemment, et portant les mêmes références numériques, ne seront pas redécrits en détail ici.

La profondeur ne doit pas fragiliser la tige qui doit rester rigide sous l'action des efforts appliqués. Une profondeur de l'ordre du ¼ de la dimension concernée est une valeur correcte.

Dans ce mode de réalisation, la tige 10 comporte dans sa hauteur des moyens d'ancrage 18 qui sont formés de créneaux parallèles au plan de la membrane au repos.

Comme bien illustré à la figure 4, ces créneaux sont annulaires et débouchent sur le pourtour de la tige rigide cylindrique 10. Dans ce mode de réalisation, trois créneaux circulaires 18 sont superposés dans l'axe longitudinal de la tige 10.

Ces créneaux 18 sont formés de gorges annulaires de section transversale carrée ou rectangulaire dont un côté est ouvert dans la paroi longitudinale de la tige 10.

Bien entendu, un seul créneau pourrait être réalisé dans le corps de la tige 10, ou encore un nombre égal à deux ou supérieur à trois.

Les créneaux 18 débouchant ainsi dans la paroi longitudinale de la tige 10, ces moyens d'ancrage sont particulièrement bien adaptés à transmettre un effort à la membrane 12 lorsque la force de sollicitation F2 de la tige 10 est normale, c'est-à-dire dans l'axe de la tige 10, perpendiculairement à la membrane 12.

On a illustré sur la figure 3 le capteur noyé dans un élément 20, celui-ci étant sollicité par une force F2 de traction tendant à séparer l'élément 20 de la tige 10.

Grâce à la présence des créneaux 18, l'ancrage de la tige 10 dans l'élément 20 est amélioré.

On va décrire à présent un troisième mode de réalisation en référence à la figure 5, les éléments communs aux modes de réalisation précédents portant les mêmes références numériques.

Dans ce mode de réalisation, la tige est structurée de telle sorte que les moyens d'ancrage sont formés par une portion élargie de la tige 10.

Cette portion élargie a ici une forme de tronc de cône, la base élargie du tronc de cône constituant une extrémité libre 10a de la tige 10.

Dans ce mode de réalisation où le capteur est noyé dans un élément 20, lorsque la force de sollicitation F2 est perpendiculaire à la membrane 12, cette portion élargie de l'extrémité libre 10a de la tige permet d'assurer un ancrage mécanique favorable à la transmission de l'effort à la membrane 12.

Bien entendu, dans les modes de réalisation précédents, on a illustré un capteur noyé intégralement dans un élément 20, par exemple en matériau souple type caoutchouc.

On va décrire à présent en référence à la figure 6 un quatrième mode de réalisation, les éléments communs aux modes de réalisation précédents portant les mêmes références numériques.

Dans ce mode de réalisation, la tige 10 comprend des moyens d'ancrage constitués à la fois de créneaux 17 perpendiculaires à la membrane 12 et de créneaux 18 parallèles à la membrane 12.

Ici, ce dispositif de mesure de force comprend des créneaux 17 débouchant dans la paroi d'extrémité libre 10a de la tige 10 et un créneau 18 débouchant dans la paroi longitudinale de la tige 10.

On peut ainsi combiner les deux types de créneaux décrits précédemment en référence au premier et deuxième modes de réalisation de l'invention.

Bien entendu, les modes de réalisation décrits précédemment peuvent être combinés.

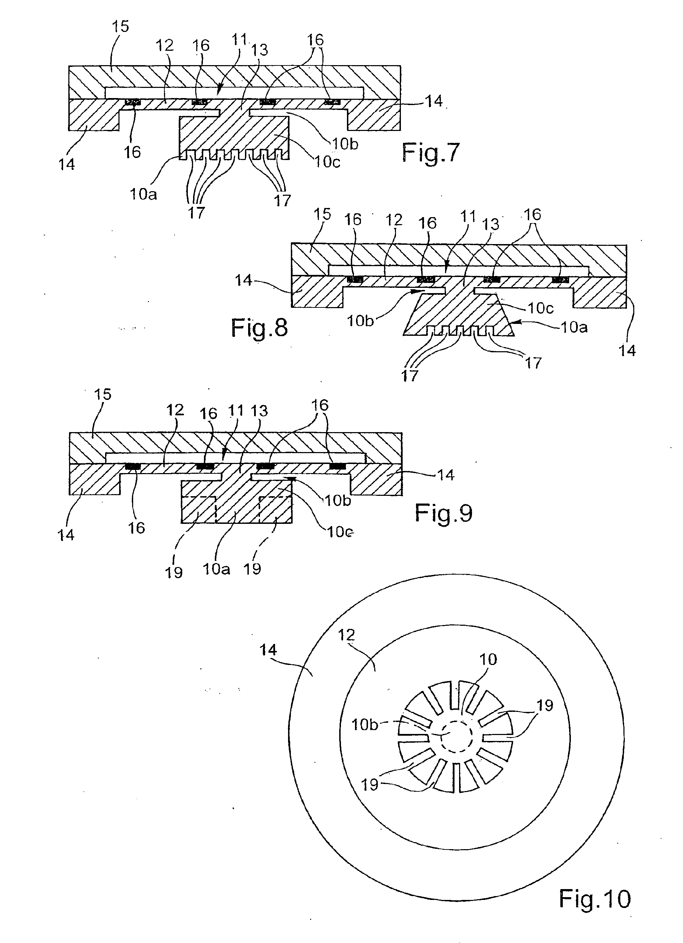

En particulier, comme bien illustré à la figure 7 dans un quatrième mode de réalisation, la tige 10 peut à la fois présenter une portion élargie 10c et des créneaux 17 s'étendant perpendiculairement au plan de la membrane 12.

Ainsi, la tige 10 présente dans ce mode de réalisation une première partie 10b de diamètre rétréci reliée à la zone centrale 13 de la membrane 12. Cette portion rétrécie 10b est ensuite prolongée par une partie 10c de diamètre élargi, permettant d'assurer un meilleur ancrage de la tige 10 dans un élément sollicité par une force.

Ces deux parties 10b 10c de tige sont ici cylindriques et coaxiales.

De manière alternative, comme illustré dans un sixième mode de réalisation à la figure 8, la portion élargie 10c de la tige peut également avoir une forme tronconique comme décrit précédemment en référence à la figure 5.

Elle est reliée par une portion 10b de diamètre rétréci à la zone centrale 13 de la membrane 12.

Une telle structure permet d'améliorer à la fois la transmission des forces tangentielles et perpendiculaires par rapport au plan de la membrane déformable 12.

On va décrire à présent, en référence aux figures 9 et 10, un septième mode de réalisation de l'invention.

Comme dans les modes de réalisation décrits en référence à la figure 7, la tige 10 présente une portion égale 10c rattachée par une portion de diamètre rétréci 10b à la zone centrale 13 de la membrane 12.

En outre, l'extrémité libre 10a comprend des créneaux 19 bien illustrés sur la figure 10 qui débouchent à la fois dans une paroi longitudinale de la tige 10, et dans la face terminale de l'extrémité libre 10a de la tige 10.

Ces créneaux 19 sont de préférence répartis symétriquement par rapport à l'axe central longitudinal de la tige, et ici répartis régulièrement sur le pourtour de la tige cylindrique 10.

Ces moyens d'ancrage 19 permettent d'améliorer non seulement la transmission des forces tangentielles, mais aussi la transmission d'un moment auquel est soumis la tige 10.

Bien entendu, les modes de réalisation décrits précédemment ne sont nullement limitatifs et ils peuvent être combinés les uns aux autres pour améliorer l'ancrage de la tige 10 dans un élément sollicité par une force à mesurer.

Par ailleurs, le nombre et la forme des créneaux 17, 18, 19, ne sont nullement limitatifs.

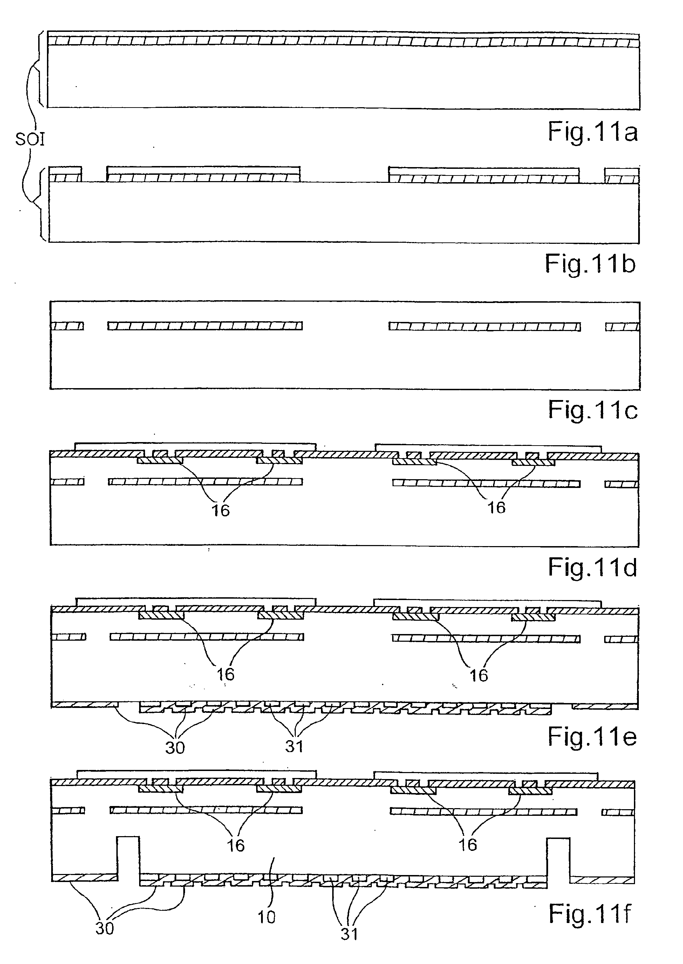

On va décrire à présent, en référence aux figures 11a à 11k, un premier procédé de fabrication permettant de réaliser des créneaux perpendiculaires à la membrane 12.

Le procédé de fabrication décrit ici utilise des techniques de micro technologie.

A partir d'un substrat SOI (Silicium sur isolant) tel qu'illustré à la figure 11a, on réalise tout d'abord la gravure des couches superficielles comme illustré à la figure 11b.

Une épitaxie, qui consiste à faire croître une couche de Si monocristal à partir du Si superficiel monocristal du substrat SOI, est ensuite mise en oeuvre telle qu'illustrée à la figure 11c.

On réalise ensuite comme illustré à la figure 11d, sur une face supérieure du substrat, l'implantation des jauges piézorésistives formant moyens de détection et des différents conducteurs permettant de réaliser la connexion et le montage des jauges en pont de Wheastone.

Comme illustré à la figure 11e, un double masque 30, 31, est ensuite réalisé sur la face inférieure du substrat.

Une première gravure profonde telle qu'illustrée à la figure 11f permet d'amorcer la réalisation de la tige 10.

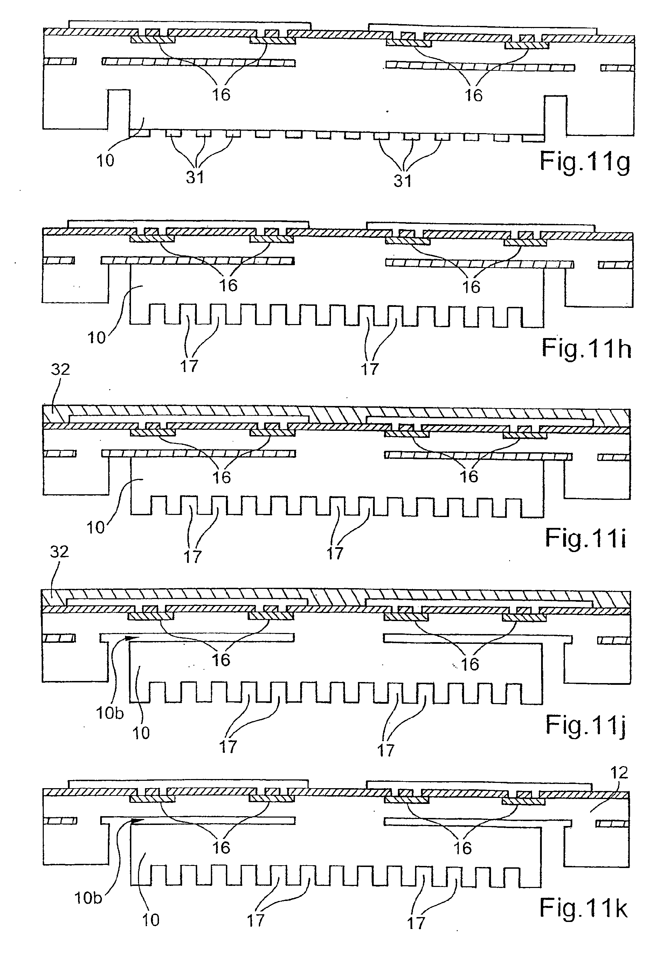

Comme illustré à la figure 11g, le premier masque 30 est ensuite éliminé, le second masque 31 restant présent permettant de délimiter une série de créneaux débouchant sur l'extrémité libre de la tige 10 en cours de formation.

Ici, ce second masque 31 forme une série de bandes parallèles espacées les unes des autres d'un pas régulier.

Comme illustré à la figure 11h, une deuxième gravure profonde est réalisée, puis le second masque 31 est également éliminé. Les créneaux 17 sont ainsi formés.

A la figure 11i, une protection 32 de la face supérieure portant les moyens de détection et les conducteurs est mise en place.

Puis, comme illustré à la figure 11j, une gravure de la couche d'oxyde sacrifiée du substrat SOI est réalisée afin d'obtenir la portion 10b de diamètre rétréci de la tige 10.

Enfin, la protection 32 de la face supérieure est retirée comme illustré à la figure 11k.

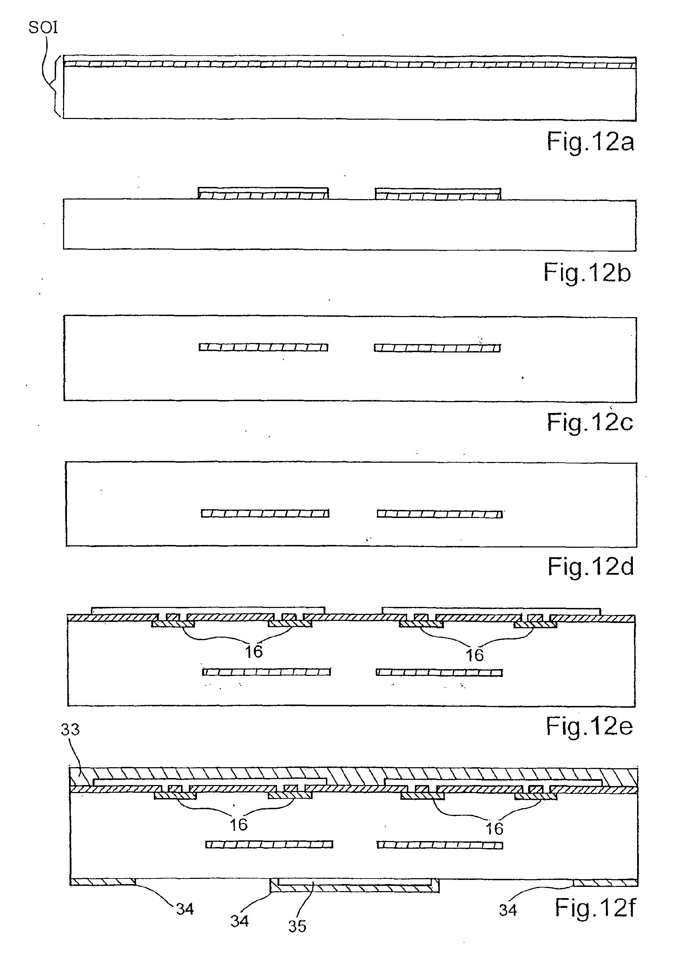

On va décrire à présent, en référence aux figures 12a à 12k, un deuxième procédé de fabrication d'un dispositif de mesure de force conforme à l'invention dans lequel la tige comporte un créneau s'étendant parallèlement au plan de la membrane 12.

Comme précédemment, on met en oeuvre des techniques de micro technologie.

A partir d'un substrat SOI tel qu'illustré à la figure 12a, on réalise la gravure des couches superficielles comme illustré à la figure 12b, puis une épitaxie telle qu'illustrée à la figure 12c.

Dans ce procédé de fabrication, on inverse les faces du substrat comme illustré à la figure 12d, la face supérieure devenant la face inférieure et vice-versa.

Ensuite, comme illustré à la figure 12e, on réalise de manière connue les moyens de détection 16 et la connexion électrique de ces moyens de détection 16 sur une face supérieure du substrat.

On réalise ensuite tel qu'illustré à la figure 12f à la fois une protection 33 de la face supérieure du substrat, par exemple à l'aide d'une résine, puis un double masque 34, 35, sur la face inférieure du substrat. Ce double masque peut être réalisé à l'aide d'un oxyde placé sous une résine.

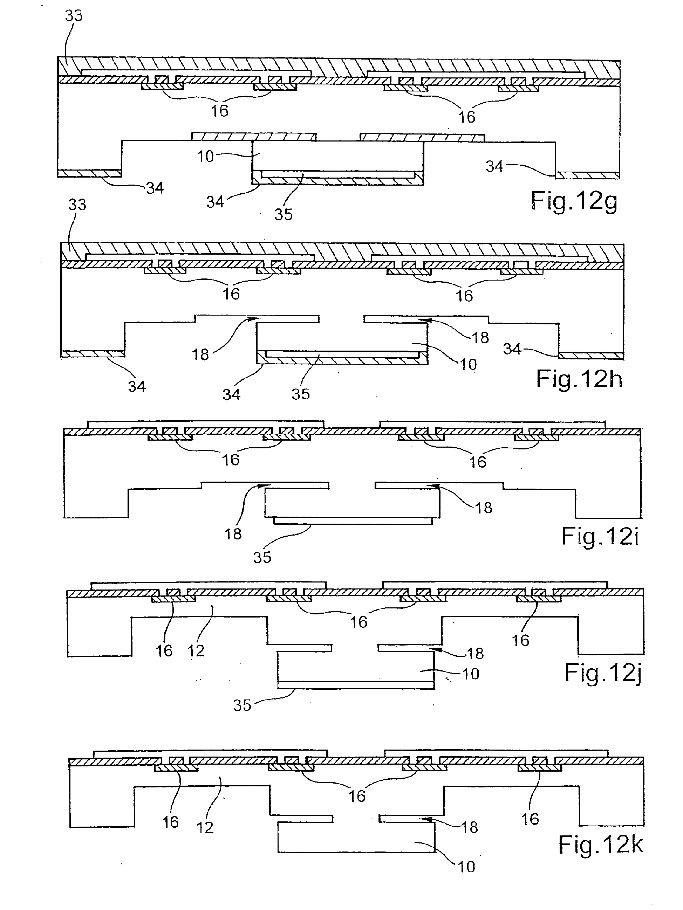

Une première gravure profonde permet d'amorcer la structure de la tige 10 du capteur tel qu'illustré à la figure 12g.

Comme illustré à la figure 12h, une gravure humide de la face inférieure du substrat permet de graver la couche d'oxyde sacrifiée de manière à réaliser un créneau 18 s'étendant parallèlement au plan de la membrane.

On élimine ensuite le premier masque 34 à base de résine ainsi que la protection 33 de la face supérieure du substrat comme illustré à la figure 12i.

Une deuxième gravure profonde est réalisée comme illustré à la figure 12j de manière à réaliser à la fois le plan de la membrane 12 et le corps de la tige 10 au niveau de sa jonction avec la membrane 12.

Enfin, comme illustré à la figure 12k, le deuxième masque à base d'oxyde est éliminé.

Bien entendu, les procédés de fabrication décrits précédemment ne son donnés qu'à titre d'exemples non limitatifs.

En particulier, d'autres techniques plus conventionnelles pourraient être mises en oeuvre pour réaliser un dispositif de mesure de force conforme à l'invention.

En particulier, les différentes parties de la structure pourraient être réalisées par usinage classique, puis assemblées.

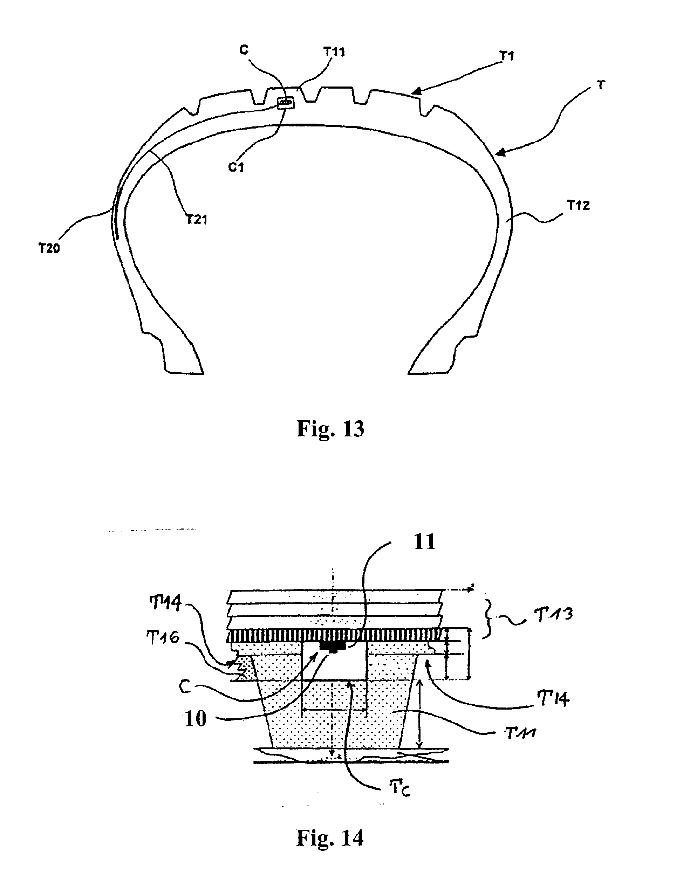

A la figure 13, on aperçoit un pneumatique T, pourvu d'une bande de roulement T1. La bande de roulement comporte un élément de sculpture T11, à savoir une nervure faisant par exemple tout le tour de la bande de roulement. L'élément de sculpture T11 comporte un capteur C, inséré de préférence dans une zone non usante de celle-ci, comme on le voit plus en détails à la figure 14, où l'on a représenté seulement l'élément de sculpture T11, en contact avec le sol. Le pneumatique T comporte une armature de renforcement T13, généralement composée de fils textiles et/ou métalliques, noyés dans un élastomère chargé. Il va de soit que l'armature de renforcement ne fait pas partie en soi de la présente invention, et qu'il est inutile d'en rappeler toutes les conceptions dans le contexte de la présente invention.

A la figure 14, est également schématisé un témoin d'usure T16, constitué comme bien connu en soi d'une surépaisseur de caoutchouc moulée dans le fond d'un sillon T14. La zone encadrée T_{C} représente la zone préférentielle d'insertion du capteur C dans la bande de roulement T1.

Lors de la fabrication des pneumatiques, on connaît différentes étapes, incluant une étape consistant à enrouler la bande de roulement sur une ébauche de pneumatique. A ce stade, le pneumatique est dit cru. Ensuite, il est moulé et vulcanisé en presse de cuisson au moyen d'un moule. Le capteur C peut être positionné au cours de la fabrication, sur l'armature de renforcement T13, juste avant l'étape d'enroulement de la bande de roulement T1. L'homme du métier pourra adapter la technique d'insertion du capteur, suivant le procédé de fabrication du pneumatique qui est employé.

Lors de l'étape de moulage du pneumatique en tout début de la vulcanisation, l'élastomère chargé constituant la bande de roulement est susceptible de subir des déplacement fluides sous l'action conjuguée de la pression de moulage et de l'augmentation de la température. Pour éviter que le capteur ne subisse un déplacement par rapport à sa position initiale dans le bandage cru, on peut réaliser un insert C1 (voir figure 13) prémoulé et au moins partiellement vulcanisé, contenant le capteur. L'insert comporte un petit volume d'élastomère chargé, de préférence de même composition que celui de la bande de roulement. L'insert peut contenir l'embase, le ou les ergots ou l'accessoire, décrits ci-dessus. Un tel insert prémoulé peut faciliter un positionnement relatif précis des différents composants que contient l'insert, et favorise également le positionnement précis de tous ces composants dans le pneumatique. L'insert C1 est bien entendu implanté dans la zone encadré T_{C}.

Il est également possible d'opter pour une technique inspirée du rechapage. Une bande de roulement contenant les composants évoqués ci-dessus est prémoulée, voire prévulcanisée au moins partiellement, et rapportée sur une ébauche, la vulcanisation de l'ensemble étant achevée pour bien rendre solidaires tous ces éléments.

Afin de favoriser une bonne transmission à la partie sensible du capteur des efforts subis par l'élastomère chargé dans lequel est inséré le capteur, on peut prévoir un traitement préalable de la surface du capteur et des différents composants éventuellement utilisés, par exemple au moyen d'un produit disponible dans le commerce comme le Chémosyl, ou tout autre produit destiné à assurer la cohésion entre un élastomère chargé et un autre élément. Un traitement de ce type a également pour avantage d'assurer une bonne cohésion entre eux des différents constituants du pneumatique, y compris les éléments rapportés, et donc d'assurer en utilisation une bonne endurance du pneumatique.

Le capteur C est ainsi situé dans la partie de la bande de roulement non soumise à l'usure en utilisation normale du pneumatique. Le capteur C lui-même est représenté de façon schématique dans cette zone, sans préjuger de sa taille exacte par rapport à l'élément de sculpture T11, les éléments de sculpture pouvant être de taille et de forme très différentes suivant le type de pneumatique et la dimension du pneumatique.

Le capteur C n'est représenté centré par rapport à l'élément de sculpture sur les figures 13 et 14 que pour des besoins illustratifs. Il va de soi que le capteur peut occuper une position non centrée par rapport à un élément de sculpture, que ce soit dans le sens longitudinal ou transverse de cet élément. Il peut être positionné avec sa tige 10 orientée vers la surface de la bande de roulement T1, comme aux figures 7 à 9 et 13 à 15, ou en sens contraire comme aux figures 10 et 11.

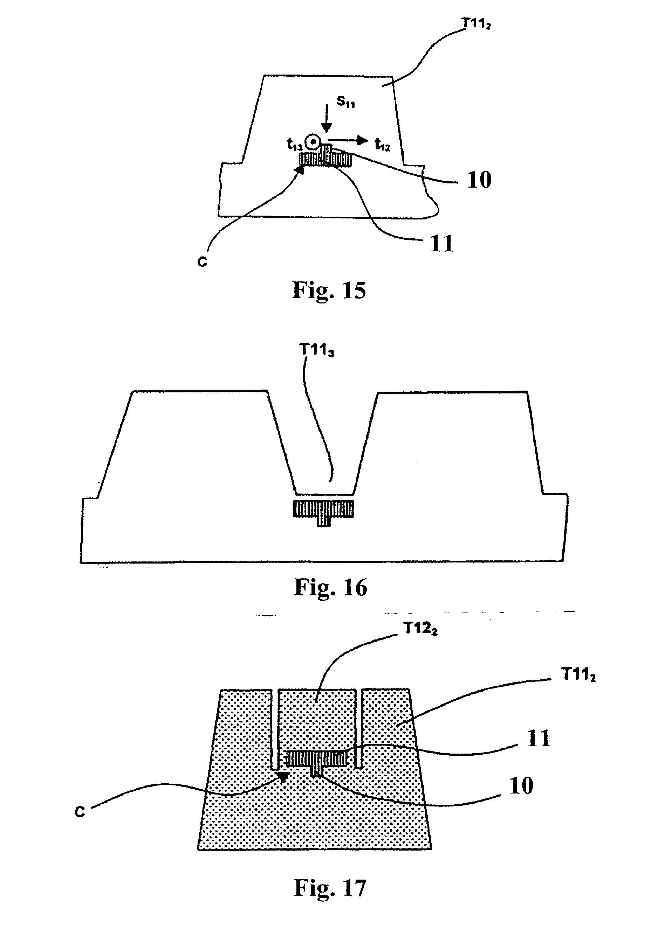

En consultant la figure 15, on voit que le capteur C permet de mesurer trois contraintes : une contrainte de compression notée s₁₁, et deux contraintes de cisaillement notées t₁₂ et t₁₃. Ce capteur, placé dans une partie non usante de l'élément de sculpture T11, permet de mesurer les contraintes existantes dans cet élément de sculpture pendant toute la durée de vie du pneumatique, ou au moins d'en obtenir une représentation suffisamment fidèle pour être exploitable utilement. Le capteur C permet de fournir une indication de l'effort appliqué perpendiculairement à la surface de contact de l'élément de sculpture avec le sol, ainsi que des indications sur les efforts tangentiels appliqués à cet élément de sculpture dans ladite surface de contact.

Appliqué à un type de pneumatique décrit dans la demande de brevet EP1076235A1, il est possible d'estimer par exemple le potentiel de frottement de cet élément de sculpture et le potentiel d'adhérence du pneumatique.

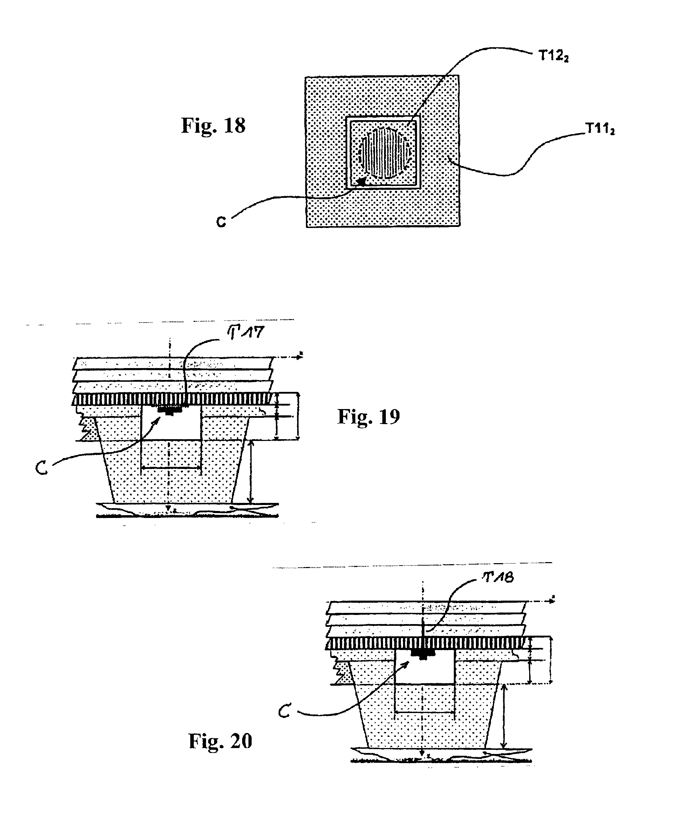

Le capteur C peut être inséré dans un élément de sculpture T11 supposé continu dans le sens circonférentiel de la bande roulement T1, comme aux figures 13 et 14 ou encore dans un élément isolé tel que le pain de sculpture T11₂ de la figure 18. Les deux types d'éléments de sculpture sont évoqués dans la demande de brevet EP1076235A1. On peut encore citer la demande de brevet EP1231120A1, qui décrit un élément tel que le pain de sculpture T11₂ des figures 17 et 18, comportant une partie centrale T12₂ et son utilité pour l'évaluation du potentiel de frottement de cet élément de sculpture et du potentiel d'adhérence du pneumatique.

Soulignons encore que le choix du sens d'implantation du capteur ne dépend pas du type d'élément de sculpture auquel il est associé, seul son étalonnage pouvant dépendre du sens d'implantation, et du type d'élément de sculpture auquel il est associé.

A la figure 16, on a aussi illustré que le capteur C peut également être positionné entre deux éléments de sculpture (pains isolés ou nervures) adjacents dans le sens longitudinal ou transversal de la bande roulement, et là encore aussi bien tige orientée vers la surface de la bande de roulement qu'orientée vers l'armature de renforcement.

L'essentiel est que le capteur soit inséré dans la zone non usante de la bande de roulement pour garantir son fonctionnement durant toute la vie du pneumatique en utilisation normale. Pour un pneumatique comportant une armature de renforcement et une bande de roulement, ladite bande de roulement comportant une partie destinée à être usée, le capteur est donc disposé dans la bande de roulement, entre la partie destinée à être usée et l'armature de renforcement.

Selon une variante de réalisation de l'invention illustrée à la figure 19, un accessoire T17, rigide ou semi-rigide, de plus grande taille que le capteur C lui même peut lui être adjoint, notamment dans le but de faciliter son positionnement pendant la fabrication du pneumatique, et d'éviter notamment qu'il ne se déplace lors de l'étape de moulage du pneumatique. Ledit accessoire T17 peut être en métal, en polymère ou encore en céramique. Il est préférable que sa rigidité soit supérieure à celle de l'élastomère chargé constituant la bande roulement T1, et que sa surface soit supérieure à la plus grande surface du capteur C. Là encore, le sens d'implantation de la tige 10 du capteur C représenté à la figure 19 n'est pas limitatif.

Selon une autre variante illustrée à la figure 20, le capteur peut encore être muni sur sa face externe d'un ou plusieurs ergot T18, toujours dans le but de faciliter son positionnement lors de la fabrication du pneumatique et d'éviter qu'il ne se déplace lors de l'étape de moulage. L'ergot ou les ergots T18 sont constitués d'un matériau de préférence assez rigide, par exemple un métal, une céramique, un polymère ou encore du silicium. Selon une disposition plus particulière de cette variante, l'ergot peut être terminé par une tête ou un crochet destiné à assurer encore un meilleur positionnement et une meilleure stabilité de sa position lors de l'étape de moulage et de cuisson du bandage.

On peut en particulier combiner les deux variantes d'implantation du capteur précédemment décrites.

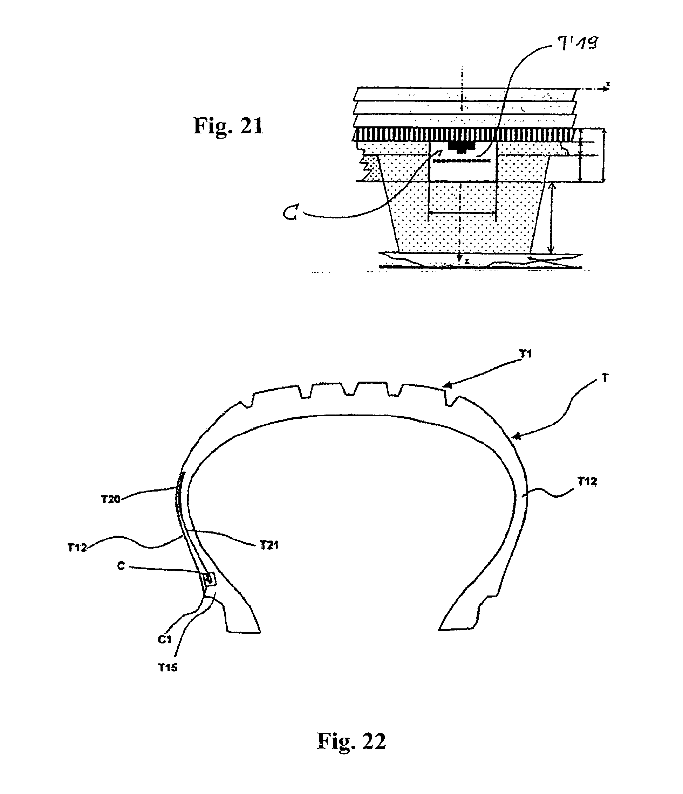

Enfin, selon une autre aspect, illustrée à la figure 21, totalement indépendant des choix d'implantation du capteur C, il peut être souhaitable d'associer au capteur C une embase T19 formée par exemple par une plaque rigide ou semi rigide, positionnée là encore dans la zone non usante de la bande de roulement, entre le capteur et le sol. Un intérêt d'une telle embase T19 est de moyenner les efforts transmis au capteur selon l'axe vertical par l'élastomère chargé de la bande de roulement. Un autre intérêt réside dans la protection du capteur, lorsque le pneumatique roule sur un cailloux ou quelque chose de similaire. Un cailloux particulièrement pointu peut provoquer dans un élément de sculpture, en cours de roulage, des champs de contraintes verticales locales particulièrement élevées, transmises au capteur par l'intermédiaire de l'élastomère chargé composant la sculpture du pneumatique, et pourrait provoquer la destruction du capteur. Le matériau de l'élément plaque rigide ou semi rigide peut être par exemple un métal, une céramique, un polymère, du silicium, ou encore un composite composé d'une matrice élastomère chargé et d'un matériau tel que ceux utilisés dans la réalisation des armatures de renforcement pour les pneumatiques. Il convient bien entendu que la rigidité de ladite embase T19 soit supérieure à celle de l'élastomère chargé composant la bande de roulement et que ladite embase T19 soit capable de moyenner les contraintes transmises par les aspérités du sol. La surface de ladite embase T19 est de préférence au moins égale à celle du capteur, et de préférence au plus égale à la surface de l'élément de sculpture T11.

Le fonctionnement du capteur nécessité au minimum une électronique de mesure, un système d'alimentation; et un système de codage et de transmission des données vers le véhicule.

Quant à l'électronique de mesure, elle peut être réalisée sous forme d'ASIC de très petite taille et être soit accolée au capteur lui-même, par exemple dans l'insert, soit positionnée à côté de celui-ci, toujours de préférence à l'opposé de la partie sensible du capteur.

L'alimentation du capteur en énergie peut être assurée par une pile ou une micro batterie insérée avec le capteur C, par exemple dans un insert prémoulé. Des connexions similaires à celles décrites précédemment peuvent être prévues pour relier le capteur à la source d'énergie. Dans une autre configuration cette alimentation pourrait être une télé alimentation. La transmission des données vers le véhicule peut se faire avec des moyens classiques de télétransmission. L'électronique de codage de l'information est intégrée sous forme d'ASIC et connectée à une antenne, par exemple une antenne de champ électrique de type quart d'onde, positionnée dans la bande de roulement. L'ensemble de ces éléments est de préférence intégré avec le capteur et l'électronique de mesure dans un insert tel que décrit ci dessus. Le matériau et la forme de l'antenne sont choisis de façon à ne pas dégrader l'endurance du pneumatique.

Une autre solution consiste à télé alimenter le capteur au moyen de procédé classique de télé alimentation. On peut par exemple positionner une antenne T20 de type boucle, dite antenne secondaire, dans le mélange d'élastomère chargé constituant un flanc T12 du pneumatique T, ou sous la bande roulement T11. Cette antenne secondaire est reliée électriquement à l'électronique du capteur par un câble T21. Une antenne dite primaire (non représentée) est positionnée sur le véhicule en regard de l'antenne secondaire. La source de puissance est dans le véhicule ; c'est par exemple la batterie de celui-ci. La transmission de puissance de l'antenne primaire fixe positionnée sur le véhicule, à l'antenne secondaire tournante avec le pneumatique et relié électriquement au capteur, se fait par couplage inductif. Dans un tel cas, la transmission des données est effectuée par les mêmes antennes, par exemple par modulation de fréquence ou d'amplitude du signal de puissance.

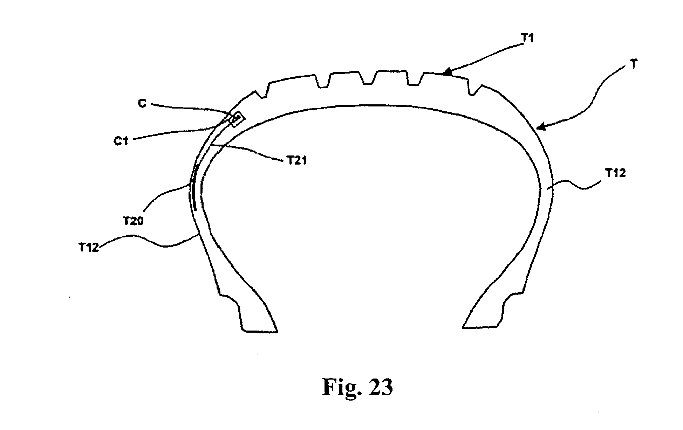

Aux figures 22 et 23, on a illustré, parmi de nombreuses variantes d'implantations possibles, deux autres implantations dans une partie non usante du pneumatique. A la figure 22, le capteur C est inséré entre un flanc T12 et le bourrelet T15. A la figure 23, le capteur C est inséré entre un flanc T12 et la bande de roulement T1, c'est à dire dans l'épaule. Il né s'agit évidemment pas de faire des mesures dans la bande de roulement. Le capteur C permet, quelle que soit la zone du pneumatique dans laquelle il est implanté, d'effectuer des mesures de la contrainte de compression s₁₁, et des deux contraintes de cisaillement notées t₁₂ et t₁₃ (voir figure 15) à l'endroit où est implanté le capteur. On voit également que le capteur peut être relié à une antenne T20 par un câble T21.

## Revendications

1. Pneumatique comportant un dispositif de mesure de force comprenant une tige rigide(10) reliée à une membrane (12) sensiblement plane déformable comportant des moyens de détection (16) d'une déformation de ladite membrane (12), la tige comportant au moins une portion adaptée à être en contact avec un élément (20, T11) apte à être sollicité par ladite force (F), **caractérisé en ce que** ladite portion de tige (10) comporte des moyens d'ancrage lesdits moyens d'ancrage comportant des créneaux (17, 18. 19) adaptés à coopérer avec ledit élément (20, T11).

2. Pneumatique selon la revendication 1, dans lequel les créneaux (17) sont perpendiculaires à la membrane (12).

3. Pneumatique selon l'une des revendications 1 et 2, dans lequel les créneaux (18) sont parallèles à ladite membrane (12).

4. Pneumatique selon l'une des revendications 1 à 3, tel qu'il comprend des créneaux (19) débouchant à la fois dans une paroi longitudinale de la tige (10) et dans une face de l'extrémité libre (10a) de la tige (10).

5. Pneumatique selon l'une des revendications 1 à 4, tel que les créneaux (17, 18, 19) sont répartis symétriquement par rapport à l'axe central longitudinal de la tige (10).

6. Pneumatique selon l'une des revendications 1 à 5, tel que les moyens d'ancrage sont formés par une portion élargie (10c) de ladite tige (10).

7. Pneumatique selon la revendication 6, tel que ladite portion élargie (10c) a une forme de tronc de cône, la base élargie du tronc de cône constituant une extrémité libre (10a) de ladite tige (10).

8. Pneumatique selon l'une des revendications 1 à 7, tel que ladite portion de tige est adaptée à être noyée dans ledit élément (20, T11).

9. Pneumatique selon l'une des revendications 1 à 8, comportant une armature de renforcement et une bande de roulement, ladite bande de roulement comportant une partie destinée à être usée, dans lequel le dispositif de mesure de force est disposé dans la bande de roulement, entre la partie destinée à être usée et l'armature de renforcement.

10. Pneumatique selon l'une des revendications 1 à 8, comportant un flanc et un bourrelet, dans lequel le dispositif de mesure de force est implanté entre le flanc et le bourrelet.

11. Pneumatique selon l'une des revendications 1 à 8, comportant un flanc et une épaule, dans lequel le dispositif de mesure de force est implanté entre le flanc et l'épaule.

## Claims

1. Tyre comprising a force measurement device comprising a rigid stem (10) connected to a deformable substantially flat membrane (12) comprising detection means (16) for detecting a deformation of the said membrane (12), the stem comprising at least one portion designed to be in contact with an element (20, T11) on which the said force (F) can act, **characterized in that** the said portion of stem (10) comprises anchoring means, said anchoring means comprising crenellations (17, 18, 19) designed to collaborate with the said element (20, T11) .

2. Tyre according to Claim 1, in which the crenellations (17) are perpendicular to the membrane (12).

3. Tyre according to one of Claims 1 and 2, in which the crenellations (18) are parallel to the said membrane (12).

4. Tyre according to one of Claims 1 to 3, such that it comprises crenellations (19) that open both into a longitudinal wall of the stem (10) and into a face of the free end (10a) of the stem (10).

5. Tyre according to one of Claims 1 to 4, such that the crenellations (17, 18, 19) are distributed symmetrically with respect to the longitudinal central axis of the stem (10).

6. Tyre according to one of Claims 1 to 5, such that the anchoring means are formed by a widened portion (10c) of the said stem (10).

7. Tyre according to Claim 6, such that the said widened portion (10c) has the shape of a cone frustum, the widened base of the cone frustum constituting a free end (10a) of the said stem (10).

8. Tyre according to one of Claims 1 to 7, such that the said stem portion is designed to be embedded in the said element (20, T11) .

9. Tyre according to one of Claims 1 to 8, comprising a reinforcing structure and a tread, the said tread comprising a part intended to be worn, in which tyre the force measurement device is positioned in the tread, between the part intended to be worn and the reinforcing structure.

10. Tyre according to one of Claims 1 to 8, comprising a sidewall and a bead, in which tyre the force measurement device is installed between the sidewall and the bead.

11. Tyre according to one of Claims 1 to 8, comprising a sidewall and a shoulder, in which tyre the force measurement device is installed between the sidewall and the shoulder.

## Patentansprüche

1. Luftreifen, der eine Kraftmessvorrichtung aufweist, die einen starren Schaft (10) enthält, der mit einer im Wesentlichen ebenen, verformbaren Membran (12) verbunden ist, die Einrichtungen (16) zur Erfassung einer Verformung der Membran (12) aufweist, wobei der Schaft mindestens einen Abschnitt aufweist, der geeignet ist, um mit einem Element (20, T11) in Kontakt zu stehen, das von der Kraft (F) beaufschlagt werden kann, **dadurch gekennzeichnet, dass** der Schaftabschnitt (10) Verankerungseinrichtungen aufweist, wobei die Verankerungseinrichtungen Lücken (17, 18, 19) aufweisen, die geeignet sind, um mit dem Element (20, T11) zusammenzuwirken.

2. Luftreifen nach Anspruch 1, bei dem die Lücken (17) lotrecht zur Membran (12) sind.

3. Luftreifen nach einem der Ansprüche 1 und 2, bei dem die Lücken (18) parallel zur Membran (12) sind.

4. Luftreifen nach einem der Ansprüche 1 bis 3, derart, dass er Lücken (19) enthält, die sowohl in einer Längswand des Schafts (10) als auch in einer Seite des freien Endes (10a) des Schafts (10) münden.

5. Luftreifen nach einem der Ansprüche 1 bis 4, derart, dass die Lücken (17, 18, 19) bezüglich der Mittellängsachse des Schafts (10) symmetrisch verteilt sind.

6. Luftreifen nach einem der Ansprüche 1 bis 5, derart, dass die Verankerungseinrichtungen von einem verbreiterten Abschnitt (10c) des Schafts (10) gebildet werden.

7. Luftreifen nach Anspruch 6, derart, dass der verbreiterte Abschnitt (10c) eine Kegelstumpfform hat, wobei die verbreiterte Basis des Kegelstumpfs ein freies Ende (10a) des Schafts (10) bildet.

8. Luftreifen nach einem der Ansprüche 1 bis 7, derart, dass der Schaftabschnitt geeignet ist, um in das Element (20, T11) eingebettet zu werden.

9. Luftreifen nach einem der Ansprüche 1 bis 8, der eine Verstärkungsbewehrung und einen Laufstreifen aufweist, wobei der Laufstreifen einen Bereich aufweist, der dazu bestimmt ist, abgenutzt zu werden, wobei die Kraftmessvorrichtung im Laufstreifen zwischen dem zur Abnutzung bestimmten Bereich und der Verstärkungsbewehrung angeordnet ist.

10. Luftreifen nach einem der Ansprüche 1 bis 8, der eine Flanke und einen Wulst aufweist, wobei die Kraftmessvorrichtung zwischen der Flanke und dem Wulst eingesetzt ist.

11. Luftreifen nach einem der Ansprüche 1 bis 8, der eine Flanke und eine Schulter aufweist, wobei die Kraftmessvorrichtung zwischen der Flanke und der Schulter eingesetzt ist.
